# FASCICULE DE BREVET EUROPEEN

(11) **EP 0 641 583 B1**
(45) Date de publication et mention de la délivrance du brevet: **26.11.1997**
(21) Numéro de dépôt: 94401904.1
(22) Date de dépôt: 26.08.1994
(51) Int. Cl.: B01D 3/10, B01D 5/00, F04C 29/02, C23G 5/04

(54) **Installation pour l'épuration en continu d'un solvant**
Anlage zur kontinuierlichen Reinigung vom Lösungsmittel
Installation for the continuous purification of a solvent

(30) Priorité: 01.09.1993 FR 9310425
(43) Date de publication de la demande: 08.03.1995
(73) Titulaire: ALCATEL CIT, 75008 Paris (FR)
(72) Inventeur: Durand, Pascal, F-74330 La Balme de Sillingy (FR)
(74) Mandataire: Gosse, Michel

(56) Documents cités:
- EP-A- 0 486 726
- DE-A- 2 740 886
- DE-A- 3 738 006
- FR-A- 2 540 190
- FR-A- 2 544 025
- US-A- 3 106 928
- US-A- 3 558 436

## Description

La présente invention concerne une installation pour l'épuration en continu d'un solvant.

Dans l'industrie, il est courant d'utiliser des solvants pour des opérations de lavage ou de nettoyage de pièces.

Lorsqu'un solvant est "usé", c'est-à-dire lorsqu'après utilisation il contient trop de matières dissoutes, il est habituel de l'épurer par distillation.

Jusqu'à un passé récent, les solvants utilisés étaient des produits dont le point d'ébullition est relativement bas. On utilisait par exemple du Trichloroéthane 1,1,1 dont le point d'ébullition est de 74°C. Cependant, ces produits à bas points d'ébullition sont volatils, polluent l'atmosphère et il est recommandé de ne plus les utiliser.

Aussi, on a maintenant recours à des produits qui sont des solvants pétroliers ayant des points d'ébullition élevés supérieurs à 150°C, mais avec des points éclairs faibles inférieurs à 100°C.

Une telle température d'ébullition, élevée, impose des mesures de sécurité renforcées.

Pour pallier cet inconvénient, il est connu d'effectuer la distillation sous une pression réduite par rapport à la pression atmosphérique de façon à diminuer la température de distillation.

Une installation connue utilise une pompe à anneau liquide pour abaisser la pression dans le ballon de distillation et en même temps pour évacuer le produit distillé et le renvoyer vers l'équipement utilisateur.

Une installation de ce type ne résoud pas complètement le problème. En effet, la pression obtenue dans le ballon de distillation par la pompe à anneau liquide n'est pas suffisamment basse et il en résulte une température de distillation insuffisamment abaissée qui impose des protections de sécurité.

Par exemple, on utilise un solvant connu sous le nom "AXAREL 6100" commercialisé par la société "DUPONT DE NEMOURS", il s'agit d'un solvant pétrolier dont le point d'ébullition à pression atmosphérique est de 216°C.

Une installation de distillation de ce produit utilisant une pompe à anneau liquide pour abaisser la pression et évacuer le produit distillé permet d'obtenir une pression de distillation de 30 mbar correspondant à une température d'ébullition de 120°C. Le débit d'évacuation liquide obtenu est de 30 litres à l'heure.

Cette température d'ébullition de 120°C exige ainsi des mesures de sécurité.

En outre, ce type de pompe exige un système annexe de circulation de solvant refroidi qui est inhérent à ce type de pompe.

La présente invention a ainsi pour but de pallier ces inconvénients, et a pour objet une installation pour l'épuration en continu d'un solvant à point d'ébullition élevé, supérieur à 150°C, à la pression atmosphérique, comprenant une unité de distillation alimentée à sa partie inférieure par le solvant à épurer provenant d'un équipement utilisateur, une pompe à vide apte à véhiculer le distillat résultant de la distillation ayant son orifice d'aspiration relié à ladite unité de distillation dans une zone de recueil du distillat et son orifice de refoulement relié à une conduite de retour vers ledit équipement utilisateur, caractérisé en ce que ladite pompe à vide est une pompe à palettes comportant un ensemble fonctionnel comprenant un rotor et un stator, ledit ensemble étant situé dans une cuve remplie d'un liquide lubrifiant, ledit liquide étant constitué par ledit solvant pur.

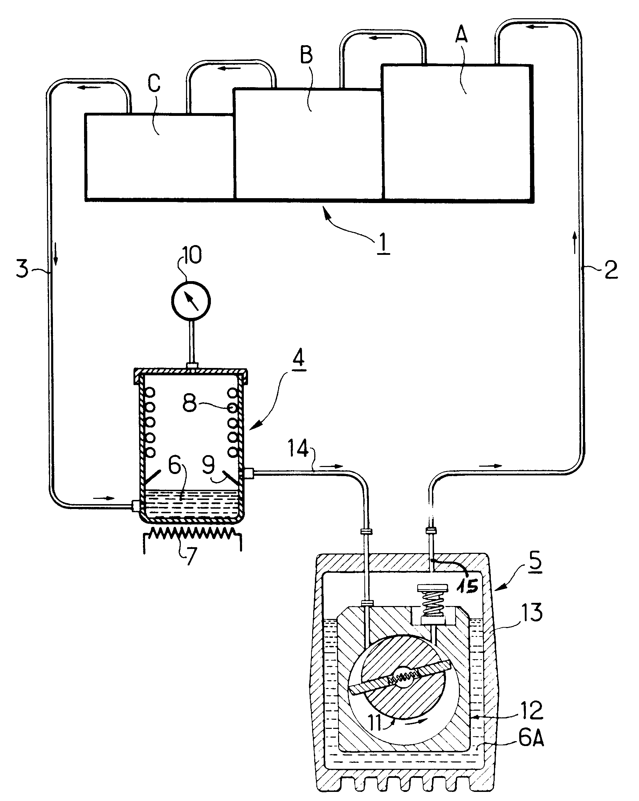

On va maintenant donner la description d'un exemple de mise en oeuvre de l'invention en se reportant au dessin annexé comportant une figure unique.

En se reportant à la figure, on voit un équipement 1 qui est par exemple une station de nettoyage de pièces industrielles. Le produit utilisé pour le nettoyage est un solvant à point d'ébullition, à pression atmosphérique élevée, supérieure à 150°C, et pouvant avoir un point éclair à une température inférieure à 100°C. Il s'agit par exemple du solvant pétrolier cité ci-dessus, commercialisé par la société "DUPONT DE NEMOURS" sous le nom "AXAREL 6100" et qui a une température d'ébullition de 216°C et un point éclair de 56°C.

L'équipement comprend par exemple différents bacs A, B, C.

Le bac A est alimenté en solvant purifié par une conduite de retour 2 et, après le bac C, le solvant "usé" est envoyé par une conduite d'alimentation 3 vers une installation d'épuration qui comprend une unité de distillation 4 et une pompe à vide 5.

L'unité de distillation 4 est ainsi alimentée en solvant 6 à sa partie inférieure par la conduite 3. Sur la figure, schématique, on a figuré un système de chauffage 7 et un serpentin condenseur 8. Le distillat est recueilli dans une goulotte 9. L'unité est équipée d'un manomètre 10.

La pompe à vide 5 est une pompe à palettes comportant un rotor 11 et un stator 12 et l'ensemble est situé dans une cuve 13 remplie du même solvant que le solvant 6 à épurer, mais il s'agit de solvant propre 6A assurant la lubrification de la pompe.

La pompe 5 a son aspiration reliée, par une conduite 14, à l'unité de distillation 4 dans la goulotte 9 et son refoulement (orifice 15) est relié à la conduite de retour 2.

Ainsi, la pompe à palettes 5 assure à la fois l'évacuation du distillat et son retour vers l'équipement utilisateur 1, et également la mise à basse pression de l'unité de distillation 4 de façon à abaisser la température de distillation. Par ailleurs, la lubrification de la pompe étant assurée par le solvant lui-même, on ne risque donc pas de souiller le solvant épuré, renvoyé par la conduite de retour 2, vers l'équipement 1.

La pompe à palettes permet d'obtenir une pression beaucoup plus faible qu'une pompe à anneau liquide et donc une température d'ébullition plus faible. Par exemple, on peut utiliser une pompe à palettes ayant un débit gazeux nominal de 12 m³/h avec un débit liquide maximal de 150 l/h (pompe de la société Alcatel dénommée "1012 P").

Pour le solvant cité ci-dessus, la pression obtenue est de 5 mbar qui correspond à une température de distillation de 65°C. Le débit liquide évacué en retour est de 30 l/h.

Cet abaissement de la température de distillation permet également un gain énergétique significatif puisque dans l'exemple décrit on ne chauffe le solvant qu'à 65°C au lieu de 120°C dans le cas de l'art antérieur cité.

## Revendications

1. Installation pour l'épuration en continu d'un solvant (6) à point d'ébullition élevé, supérieur à 150°C, à la pression atmosphérique, comprenant une unité de distillation (4) alimentée à sa partie inférieure par le solvant (6) à épurer provenant d'un équipement utilisateur (1), une pompe à vide (5) apte à véhiculer le distillat résultant de la distillation ayant son orifice d'aspiration relié à ladite unité de distillation (4) dans une zone (9) de recueil du distillat et son orifice de refoulement (15) relié à une conduite de retour (2) vers ledit équipement utilisateur, caractérisé en ce que ladite pompe à vide (5) est une pompe à palettes comportant un ensemble fonctionnel comprenant un rotor (11) et un stator (12), ledit ensemble étant situé dans une cuve (13) remplie d'un liquide lubrifiant, ledit liquide étant constitué par ledit solvant pur (6A).

## Claims

1. Installation for continuous purification of a solvent (6) with a high boiling point, in excess of 150°C at atmospheric pressure, comprising a distillation unit (4) fed in its lower part with the solvent (6) to be purified from a user equipment (1) and a vacuum pump (5) adapted to convey the distillate having its inlet connected to said distillation unit (1) in a distillate recovery area (9) and its outlet orifice (15) connected to a return pipe (2) to said user equipment, characterised in that said vacuum pump (5) is a vane pump including a functional unit comprising a rotor (11) and a stator (12), said functional unit being disposed in a tank (13) filled with a lubricating liquid, said liquid being in the form of the pure solvent (6A).

## Patentansprüche

1. Anlage für die kontinuierliche Reinigung eines Lösungsmittels (6) mit einem bei Atmosphärendruck hohen Siedepunkt oberhalb 150°C, wobei die Einrichtung eine Destillationseinheit (4), die in ihrem unteren Bereich mit dem zu reinigenden Lösungsmittel (6) aus einer Nutzeinrichtung (1) gespeist wird, und eine Vakuumpumpe (5) enthält, die das aus der Destillation resultierende Destillat fördern kann und mit ihrem Sauganschluß an die Destillationseinheit (4) in einer Destillat-Sammelzone (9) angeschlossen ist, während ihr Auslaß (15) an eine Rückspeiseleitung (2) zur Nutzeinrichtung angeschlossen ist, dadurch gekennzeichnet, daß die Vakuumpumpe (5) eine Drehschieberpumpe ist, die eine funktionale Einheit mit einem Rotor (11) und einem Stator (12) besitzt, die sich in einem mit einer Schmierflüssigkeit gefüllten Behälter (13) befindet, wobei diese Schmierflüssigkeit durch das saubere Lösungsmittel (6A) gebildet wird.
